# EUROPÄISCHE PATENTSCHRIFT

(11) **EP 1 809 985 B1**
(45) Veröffentlichungstag und Bekanntmachung des Hinweises auf die Patenterteilung: **02.04.2014**
(21) Anmeldenummer: 05811443.0
(22) Anmeldetag: 03.11.2005
(51) Int. Cl.: G01C 15/00, G01J 1/04, G01J 1/08, G01J 1/44

(54) **LICHTSTRAHLEMPFÄNGER**
LIGHT BEAM RECEIVER
RECEPTEUR DE FAISCEAU LUMINEUX

(30) Priorität: 03.11.2004 DE 102004053686
(43) Veröffentlichungstag der Anmeldung: 25.07.2007
(73) Patentinhaber: Trimble Navigation Limited, Sunnyvale, CA 94085 (US)
(72) Erfinder: ESSLING, Mirko, 55606 Kellenbach (DE)
(74) Vertreter: HOFFMANN EITLE
(86) Internationale Anmeldenummer: PCT/DE2005/001989
(87) Internationale Veröffentlichungsnummer: WO 2006/048007

(56) Entgegenhaltungen:
- WO-A-02/10681
- US-A- 4 573 783
- US-A- 4 857 717
- US-A- 5 619 262

## Beschreibung

Die vorliegende Erfindung betrifft das oberbegrifflich Beanspruchte und befasst sich somit mit einem Lichtstrahlempfänger.

Lichtstrahlempfänger werden dort benötigt, wo Lichtstrahlen zur Vermessung eingesetzt werden. Ein typischer Einsatzbereich sind die auf Baustellen und dergleichen verwendeten Rotationslaser. Diese emittieren, ähnlich einem Leuchtturm einen Strahl, der immer wieder in einer Ebene umläuft. Ist die Drehachse des Rotationslasers korrekt ausgerichtet, so liegt diese Ebene horizontal und es kann an jeder vom Laserstrahl erreichten Stelle eine Höhe relativ zu dieser Ebene bestimmt werden. Erforderlich hierfür ist, dass die Höhe des Laserstrahls exakt genug erfasst wird. Lichtstrahlempfänger sind dazu bestimmt, eine solche Strahlerkennung zu leisten.

Bei typischen Laserstrahlempfängern ist daher gewünscht, eine exakte Höhe zu bestimmen; gegebenenfalls kann auch eine andere Analyse vorgenommen werden. Typisch sind im Lichtstrahlempfänger für die gewünschte Signalerzeugung mehrere Detektorelemente vorgesehen, die voneinander beabstandet sind; aus der Verteilung des Lichtes auf diese Detektorelemente wird auf die Strahlhöhe rückgeschlossen. Es ist möglich, die Lichtstrahlendetektorelemente als positionsempfindliche Elemente auszubilden. So können als Lichtstrahlendetektorelemente Photodetektoren insbesondere an den Stirnseiten eines durchsichtigen Stabes angeordnet sein, der Licht von einer Auftreffstelle zu diesen leitet. Aus der Stärke des empfangenen Detektorsignals kann dann auf die Lage des Auftreffpunktes zwischen den Photodetektoren geschlossen werden. Prinzipiell sind derartige Anordnungen bekannt aus früheren Schutzrechten des Anmelders, insbesondere aus der PCT/EP 01/08841.

Obwohl solche Anordnungen schon wesentlich preiswerter sind als etwa Detektorzeilen zur linearen Höhenmessung wie z.B. nach US PS 5,471,049, ist es wünschenswert, die bekannte Anordnung noch zu verbessern. So können, wenn der Lichtstrahl sehr nahe bei einem Ende des Lichtstabes angekoppelt wird, Übersteuerungen an den Lichtdetektorelementen bzw. den nachfolgenden Verstärkerstufen auftreten. Bisherige Ansätze zur Vermeidung dieses Problems waren die Verwendung hoher Betriebsspannungen und der Einsatz von Verstärkerstufen oder Integratoren mit einstellbarer Verstärkung. Höhere Betriebsspannungen führen aber zu einer höheren Stromaufnahme und damit zu einer kürzeren Batterielebensdauer. Einstellbare Verstärkerstufen haben den Nachteil, dass es wegen Gleichlaufproblemen der verschiedenen Verstärker zu Linearitätsproblemen kommen kann; außerdem kann es vorkommen, dass Messwerte unbrauchbar sind, während nach einer optimalen Verstärkungseinstellung gesucht wird.

Es ist wünschenswert, eine verbesserte Lichtstrahlempfängeranordnung vorzusehen.

US 4857717 beschreibt eine automatische Fokussiereinrichtung bei der zwei Lichtempfangselemente beabstandet voneinander angeordnet sind. Die Lichtempfangselemente erzeugen Ausgangssignale, die die empfangene Lichtmenge widerspiegeln.

Die Signale werden integriert und verstärkt. Integrationsausgangsspannungen der Integrationsschaltungen werden an Vergleicher angelegt und mit Schwellwertspannungen verglichen. Ein Mikrocomputer stellt einen Zeitraum fest, der beginnt, wenn eine der Integrationsausgangs-Spannungen den Schwellwert erreicht bis zum Zeitpunkt wenn die andere Integrationsausgangsspannung den Schwellwert erreicht. Darauf basierend wird ein Fokussiersignal erzeugt.

Die Aufgabe der vorliegenden Erfindung besteht darin, Neues für die gewerbliche Anwendung bereitzustellen. Bevorzugte Ausführungsformen finden sich in den Unteransprüchen.

Diese Aufgabe der Erfindung wird durch einen Lichtstrahlempfänger mit den Merkmalen des Anspruchs 1 gelöst. Vorteilhafte Ausführungsformen sind in den abhängigen Ansprüchen offenbart.

In einem ersten Beispiel ist ein Lichtstrahlempfänger bereitgestellt zur Analyse eines Lichtstrahlempfangs mit einer aus einer Mehrzahl von Lichtstrahldetektorelementen bestehenden Detektoranordnung und Integratoren für lichtstrahlelementbasierte Signale vor, bei welchen vorgesehen ist, dass zumindest für zwei Lichtstrahlendetektorelemente dem oder den Integratoren eine signalintegralbegrenzende Integrationsdauersteuerung zugeordnet ist, so dass die Analyse des Licht-strahlempfangs im Ansprechen auf in Beziehung zueinander ausgewertete Integratorsignale erfolgt.

Eine erste, der Erfindung zu Grunde liegende Erkenntnis kann somit darin gesehen werden, dass die Messgenauigkeit beeinträchtigende Übersteuerungszustände und dergleichen ohne signifikanten Präzisionsverlust dadurch vermieden werden, dass für eine gegebene Zeit das Signal aufintegriert wird, wobei die Zeitdauer, während welcher integriert wird, bestimmt ist durch die Intensität des eingestrahlten Lichtes, namentlich die integrale, also zeitlich gemittelte bzw. aufintegrierte Intensität. Indem vermieden wird, dass trotz einer hohen Gesamtverstärkung der Integrator überläuft, sättigt oder in einen alinearen Bereich kommt, wird so einerseits eine übertrieben hohe Betriebsspannung zur Vermeidung von Übersteuerungen entbehrlich und andererseits wird dennoch sichergestellt, dass ein hoher Dynamikumfang gegeben ist, also sowohl in unmittelbarer Nähe zu einem Rotationslaser - dann nur kurz - gemessen werden kann, als auch - über einen längeren Zeitraum - in größerer Entfernung davon, wo durch Streuung und

Strahlaufweitung die Lichtintensität pro Fläche bereits signifikant abgenommen hat.

Prinzipiell wäre es möglich, als auszuwertende Integratorsignale die an einem jeweiligen Integrator bestimmte Zeit bis zu dessen maximal zulässiger Aussteuerung heranzuziehen und für mehrere Integratoren diese spezifischen Zeiten in Beziehung zu setzen. Bevorzugt ist es jedoch, wenn die signalintegralbegrenzende Integrationsdauersteuerung derart vorgesehen wird, dass die Integratoren simultan an- bzw. ausgeschaltet werden, so dass nicht die Integrationsdauer bis zum Erreichen einer maximal zulässigen Aussteuerung herangezogen werden muss, sondern vielmehr das Integral selbst als Messwert dient. Dies ist besonders dann vorteilhaft, wenn ein Strahl bereits so schwach geworden ist, dass während eines einzelnen Strahldurchgangs keine volle Aussteuerung mindestens eines Integrators mehr erreicht wird.

Obgleich nicht zwingend, können die Lichtstrahldetektorelemente an entgegengesetzten Enden eines lichtleitenden Stabes angeordnet werden, wobei aus der Lichtintensität am jeweiligen Lichtstrahldetektorelement auf den Auftreffpunkt geschlossen werden kann.

In einer besonders bevorzugten Variante wird zusätzlich eine lichtemittierende Kalibrierquelle vorgesehen, mit der insbesondere impulsartig Licht in die Detektoranordnung eingekoppelt werden kann. Außerdem ist es auch denkbar, lediglich einen Kalibrierimpuls elektronisch in die Verstärkerzüge einzukoppeln. Auch dadurch kann noch eine Abweichung des Verstärkungsfaktors, im Falle einer lichtemittierenden Kalibrierquelle sogar eine zeitliche oder temperaturabhängige Drift der Detektorelemente gegeneinander oder dergleichen leicht kompensiert werden.

Bei Verwendung von zwei beabstandeten lichtemittierenden Kalibrierquellen, die auf einem temperaturstabilen Längennormal angebracht sind, ist es sogar möglich, durch Temperaturschwankungen oder Alterung bedingte Veränderungen des Empfängerverhaltens während des Betriebes zu kompensieren.

Daß die Verwendung von Kalibrierquellen zum Zwecke der kontinuierlichen Selbstkalibrierung für sich vorteilhaft und womöglich erfinderisch auch für andere Anwendungen im Bereich Laserstrahldetektion von Rotationslasern ist, die bereits Stand der Technik sind, sei betont

Prinzipiell ist es möglich, mit dem Lichtstrahlempfänger kontinuierliche Lichtstrahlen zu empfangen, etwa dann, wenn ein einzelner Punkt aus größerer Entfernung mit einem Laserlichtstrahl oder einer Laserlinie angeleuchtet und die Strahlposition mit dem Lichtstrahlempfänger exakt bestimmt werden soll. In den typischen Anordnungen wird jedoch der Lichtstrahl repetitiv kurzfristig empfangen, was insbesondere dann der Fall ist, wenn er von einer rotierenden, insbesondere modulierten linienförmigen und/oder scannenden Laserlichtquelle, wie ein Baulaser sie üblicherweise darstellt, emittiert wird. Die Auswerteschaltung kann hierfür besonders ausgebildet sein. Die besondere Ausbildung zum Empfang eines repetitiv temporär empfangenen Lichtstrahles kann insbesondere eine Synchronisation auf eine zumindest hinreichend präzise, konstant bleibende Wiederholrate sein; hier ist es möglich, einen Teil der Schaltung während jener Phasen, in denen nicht mit einem Lichtstrahl zu rechnen ist, abzuschalten, um Energie zu sparen. Die Möglichkeit einer Synchronisationsanpassung etwa für eine Anlaufphase, während welcher die Rotation schneller wird, sei erwähnt.

Die erfindungsgemäße Begrenzung der Integrationsdauer soll insbesondere verhindern, dass ein Integrator überläuft. Dies geschieht, indem ab einem bestimmten Integratorniveau, d. h. einer bestimmten aufintegrierten Signalintensität, das weitere Anlegen eines Signals am Intgegratoreingang verhindert wird. Damit ist jedoch noch nicht vorgegeben, wann der Integrationsprozess eines Signals zu beginnen hat.

Es ist nun besonders vorteilhaft, wenn stets die Mitte des Signaldurchganges erfasst wird. Dies liegt daran, dass von Baulasern oder dergleichen emittierte Laserlichtstrahlen nicht unbedingt kreisrund sein müssen, sondern vielmehr beispielsweise ellipsoid sein können. Dies bleibt unerheblich, solange ein etwa ellipsenförmiger Strahl mit seiner großen Halbachse entweder parallel zur Verbindungslinie der Detektorelemente empfangen wird oder senkrecht dazu. Kritisch ist jedoch einsichtigerweise ein stark schräg liegendes, nichtrundes Strahlprofil. Stellt man sich nämlich zum Beispiel einen solchen extrem weit ausgedehnten Strahl vor, dessen unteres Ende zuerst auf den unteren Detektor auftritt und dessen nacheilendes Ende auf den oberen Detektor trifft, so ist der Strahl zunächst unten sehr intensiv, weshalb zunächst der untere Detektor anspricht und der Integrator die Schwelle überschreitet, noch bevor am oberen Detektor wesentliche Lichtteile angekommen sind. Dies führt dazu, dass der Strahl als vermeintlich zu tief liegend angesehen wird. Trägt die Anordnung jedoch durch geeignete Mittel dafür Sorge, dass exakt in der Mitte des Strahldurchgangs gemessen wird, so wird dieser Fehler vermieden. Es ist einsichtig, dass es demgemäß vorteilhaft ist, wenn die Auswerteschaltung zu einer um den Strahlmittendurchgang zumindest näherungsweise zeitlich symmetrischen Signalintegration ausgebildet ist. Dies kann durch Verzögerung des Integrationsbeginns relativ zu einer Anstiegsflanke oder durch Veränderung der integrationsbeginnauslösenden Signalhöhe auf der Flanke geschehen.

Es ist auch einsichtig, dass das Lichtstrahlendetektorelementsignal nicht unmittelbar integriert werden muss. Vielmehr können insbesondere auch Verstärkungs- und/oder Frequenzfilterstufen vor den Integratoren angeordnet sein, um den Signalen etwa aus Photodioden als Detektorelementen zunächst eine hinreichende Verstärkung zu erteilen und Frequenzen herauszufiltern, wie sie etwa in mit Kunstlicht beleuchteten Räumen beobachtbar sind.

Gerade bei repetitiven Laserlichtsignalen und nur langsam gegen die Wiederholfrequenz bewegten Lichtstrahlempfängern wäre es möglich, einen einzelnen Integrator vorzusehen und beispielsweise über eine Multiplexerschaltung zunächst einen ersten Detektor während eines ersten Strahldurchgangs auf den Integratoreingang zu schalten, dabei die maximal zulässige Integrationszeit zu bestimmen und hernach, bei einem zweiten Strahldurchgang, unter der Annahme, dass sich keine wesentlichen Verschiebungen und Änderungen anderer Art ergeben haben, einen zweiten Detektor für exakt die gleiche, zuvor bestimmte Zeit auf den zwischenzeitlich ausgelesenen und zurückgesetzten Integrator zu schalten. Dies wird als Vorliegen einer-zumindest virtuell, weil zeitlich gestaffelt vorhandenen-Mehrzahl von Integratoren aufgefasst. Bevorzugt ist aber in jedem Fall, jedem Detektor einen eigenen Integrator zuzuordnen, weil dies einerseits kompliziertere Multiplexerschaltungen und dergleichen entbehrlich macht und andererseits auch eine fehlerfreiere und schnellere Messung erlaubt.

Werden, wie bevorzugt, wenigstens zwei reale Integratoren vorgesehen, so können diese so zueinander synchronisiert sein, dass sie gemeinsam aktivierbar und/oder deaktivierbar sind; auch die Möglichkeit, statt einer gemeinsamen Aktivierung/Deaktivierung getrennter Integratoren eine jeweils separate Aktivierung vorzunehmen, sei erwähnt. Hier kann vorgesehen werden, die jeweilige Zeit zu bestimmen, bis zu welcher der Integrator überläuft. Aus dieser gleichfalls ein Integratorsignal darstellenden Zeit lässt sich gleichfalls die Signalstärke am Detektor bestimmen, so dass gegebenenfalls allein durch Zeitmessung und Zeitdauer-Verhältnisbildung eine Strahlhöhe oder dergleichen bestimmbar ist.

Insbesondere dann, wenn um die Strahlmitte herum eine Signalintegration vorgenommen werden soll, die Integration der Detektorsignale also nicht nur bei beginnendem Strahlauftreffen erfolgen soll, ist es bevorzugt, dem Integrator eine Torsteuerung zuzuordnen, die die an den Integrator zu speisenden und von diesem zu integrierenden Signale nur temporär und/oder bedingt durchlässt. Die Torsteuerung kann dabei insbesondere frühere Toröffnungszeiten und/oder Repetitionsfrequenzen der Lichtstrahlen berücksichtigen.

Während es prinzipiell möglich ist, gerade bei repetitiven Signalen eine Integration über mehrere Strahlendurchgänge hinweg vorzunehmen, ist es doch bevorzugt, insbesondere die Verstärkung der Detektorsignale usw. so hoch auszulegen, dass auch bei schwachen Strahlen die Integrationszeiten kurz gegen die Einstrahlzeiten sind. Es sei im übrigen darauf hingewiesen, dass für den Fall, dass bestimmte Schwellwerte am Integrator nicht überschritten werden, eventuell die damit bestimmten Signale nichtsdestoweniger ausgewertet werden können; es ist also nicht in jedem Fall zwingend eine volle Aussteuerung am Integrator erforderlich. So kann auch bei Nichterreichen einer Schwelle etwa getestet werden, ob die noch erhaltenen Signale als zumindest hinreichend angesehen werden, um - gegebenenfalls zumindest mit verringerter Genauigkeit - eine Strahlposition und dergleichen zu bestimmen.

Das Auswertemittel wird typischerweise die Analyse durchführen, wobei die Analyse insbesondere eine Bestimmung einer Strahlhöhe bzw. die Bestimmung der Auftreffhöhe bzw. -lage zwischen den Detektorelementen umfassen kann. Es sei darauf hingewiesen, dass die Integratorwerte bevorzugt in digitalisierter Form zur Analyse vorliegen, was z.B. dadurch realisiert werden kann, dass das Auswertemittel einen oder mehrere Analog/Digital-Wandler enthält. Weiter kann das Auswertemittel zur Bestimmung der Strahlmitte ausgebildet sein, also den Zeitpunkt erfassen, an dem der Strahl genau zwischen den Elementen liegt. Diese Information ist für spätere Strahldurchgänge bevorzugt auswertbar. Die Möglichkeit, anstelle der exakten Signalmitte einen anderen Bereich auswählbar zu machen, sei erwähnt. Dies kann vorteilhaft sein, wenn die Filterstufen bei entsprechend langsamen Signalen am Filterausgang ein Signal"klingeln" verursachen, also ein Signal, das durch Null geht, erzeugen und somit zwei vermeintliche Maxima erfasst werden.

Die Analyse des Lichtstrahlenempfangs kann insbesondere zur Strahlhöhenbestimmung umfassen, dass die Differenzen, die Quotienten oder die Quotienten von Differenzen und Summen der Integratorsignale bzw. wie etwa gemäß Kalibrierung erforderlich veränderten Integratorsignalen zur Analyse herangezogen werden. Alternativ können auch andere Formen einer Auswertung implementiert werden, z.B. durch geeignete Hardware-Auslegung der -gegebenenfalls auch rein analogen- Auswerteschaltungen.

Schutz wird in gleicher Weise beansprucht für ein Messverfahren, bei dem Signale für eine begrenzte Zeit integriert werden, wobei die Integrationsdauer abhängig von der Signalstärke ist und dann die Integrale zur Analyse von Strahlenmittenhöhe, Auftreffpunkten und dergleichen zu verwenden.

Die Erfindung wird im Folgenden beispielsweise anhand der Zeichnung beschrieben. In dieser ist gezeigt durch:
- Fig. 1: ein Blockdiagramm für einen Lichtstrahlempfänger mit den Stufen Lichtstrahlendetektorelement, Verstärker, Hochpassfilter, Integrator, Komparator mit zugeordneter Integrationszeitbeendigung, Analog-Digital-Wandler und Auswertestufe;
- Fig. 1a: partiell in Blockdiagrammform, wie ein bevorzugter Lichtstrahlempfänger nach Fig. 1 mit einer geeigneten Peripherie zur Anzeige, Bedienung und Spannungsversorgung versehen und unter Verwendung digitaler Bausteine realisiert wird;
- Fig. 1b: in weiterem Detail Einzelheiten von Fig. 1a, nämlich den Block 143, der die Integrationsstart- und -stoppschaltung umfasst;
- Fig. 2: wie Lichtstrahlendetektorelemente 112, 113 an den Stirnenden eines lichtleitenden Stabes 114 angeordnet werden können, während eine Kalibrierlichtquelle 111 mittig in den Strahl einkoppelt;
- Fig. 3: reale Signale, wie sie mit einer erfindungsgemäßen Anordnung erhalten werden, nämlich als obere Spur ein erfasstes Signal und als untere Spur die, wie bevorzugt, zur Strahlmitte hin verzögerte Toröffnungsdauer;
- Fig. 4: das Überstreichen eines stark in die Länge gezogenen und somit astigmatischen, schräg zum Empfänger liegenden und diesen überstreichenden Strahlbündels (obere Zeile), die dabei erhaltenen Signale an den beiden Detektorelementen mit zugeordneten Integrationsflächen (zweite Zeile) und das Verhältnis der Integrationsflächen des ersten und zweiten Signals für die unterschiedlichen Integrationsfensterlagen II, III, IV;
- Fig. 4b: die Verschiebung eines Integrationsfensters hin zur Strahlmitte durch eine Verzögerung der Toröffnung relativ zum Durchlauf der Anstiegsflanke bei Strahlauftreffen um eine Verzögerung Δt_{delay}.

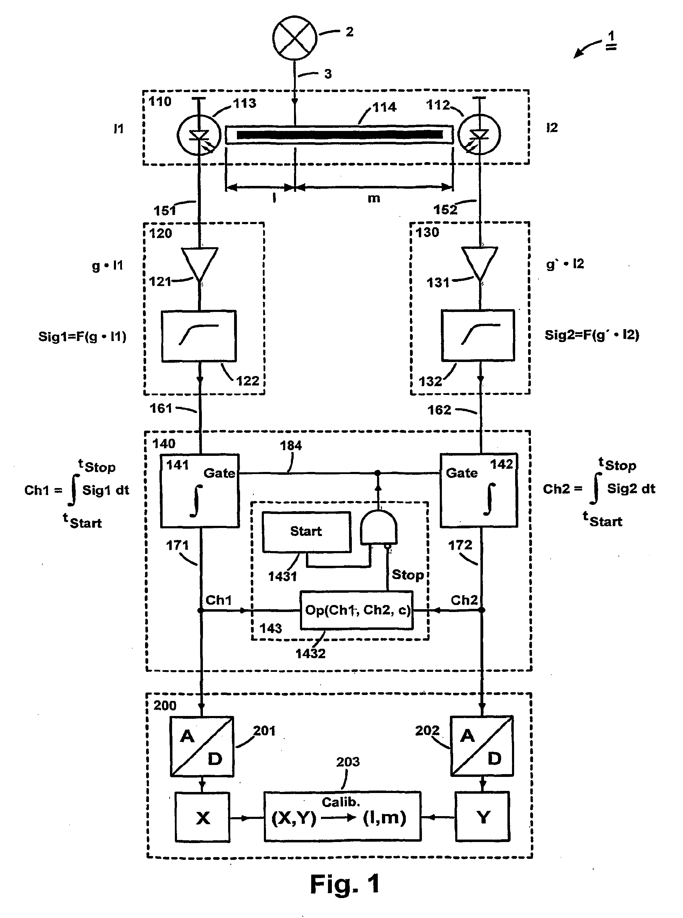

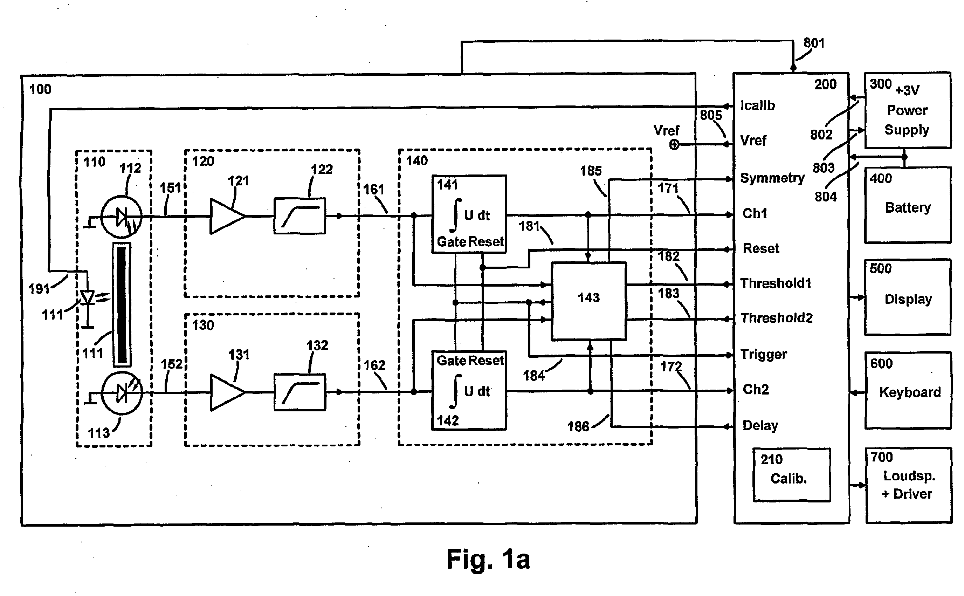

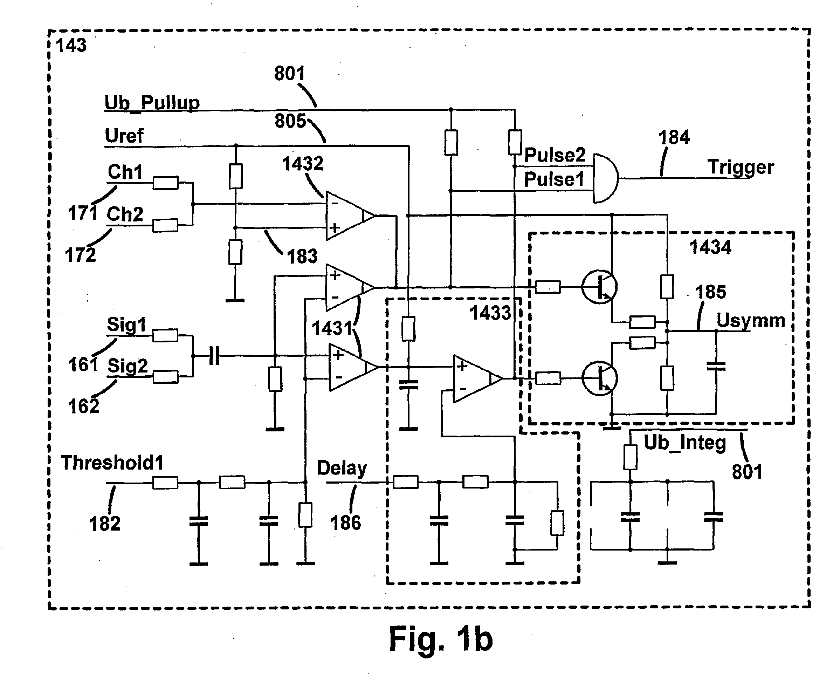

Nach Fig. 1 umfasst ein allgemein mit 1 bezeichneter Lichtstrahlempfänger 1 zur Analyse eines Empfangs eines Lichtstrahles 3 eine Lichtstrahldetektoranordnung 110, umfassend eine Mehrzahl von Detektorelementen 112, 113 und Integratoren 141, 142 für lichtstrahlenelementbasierte Signale, wobei zumindest zwei und somit hier allen Integratoren 141, 142 eine signalintegralbegrenzende Integrationsdauersteuerung 143 zugeordnet ist, so dass die Analyse des Lichtstrahlenempfangs im Ansprechen auf in Beziehung zueinander ausgewertete Integratorsignale 171, 172 ermöglicht ist, vergleiche Stufe 200 in Fig. 1.

Der Lichtstrahlempfänger 1 von Fig. 1a ist im vorliegenden Beispiel als Handempfänger realisiert, der demgemäß eine Batterieversorgung und lokale Bedienelemente usw. aufweist, wie in Fig. 1a durch die Bezugszeichen 300, 400, 500, 600 und 700 sowie einen Kalibrierdatenspeicher 210 angedeutet ist, die jeweils bezeichnen die Stromversorgung 300 mit Spannungsregelung, eine Batterie oder einen Akkumulator 400, eine Anzeige 500, eine Eingabetastatur 600 und eine Signalisiereinheit, die beispielsweise als Lautsprecher realisiert sein kann und mit 700 bezeichnet ist und zur Signalisierung eines mittigen oder zu hohen bzw. zu tiefen Strahlauftreffens, z. B. durch Tonmodulation und Tonhöhenveränderung, ausgebildet ist.

Weiter ist im Ausführungsbeispiel dem Lichtstrahlempfänger eine Kalibriereinheit zugeordnet, die nach Fig. 1a mit einer lichtemittierenden Diode 111 realisiert ist, welche über eine Leitung 191 von einer Auswerte- und Steuerungseinheit mit Leistung beaufschlagt wird und dazu ausgebildet und angeordnet ist, an bekannter Position zwischen den Detektorelementen 112, 113 Licht so zu emittieren, dass im Wesentlichen gleiche Anteile von Licht bei beiden Detektorelementen empfangen werden, so dass durch Abgleich der beiden Signale an den jeweiligen Detektoren 112, 113 zeitliche oder temperaturbedingte Variationen und dergleichen herausgerechnet werden können.

Die lichtstrahlemittierende Quelle 2 ist in Fig. 1 nur des leichteren Erkennens wegen auf der Zeichnung als Glühbirne dargestellt, wird aber in der Regel einen scharf begrenzten Lichtstrahl aussenden und insbesondere durch einen Laser realisiert sein, insbesondere einen Rotationslaser, wie er auf Baustellen üblich ist. Derartige Rotationslaser können in unterschiedlicher Ausgestaltung gebildet sein. Es wird darauf hingewiesen, dass insbesondere jene Rotationslaser einsetzbar sind, wie sie beschrieben sind in der PCT/EP 01/08841. Der Empfänger kann für die Auswertung der bei solchen Lasern kurz hintereinander auftreffenden Strahlen ohne weiteres ausgebildet sein; insbesondere können für jeden Strahl eigene Integrationsdauern, Verzögerungen etc. bestimmt werden und/oder es können zur Vereinfachung für alle Strahlen, die kurz hintereinander gruppiert den Empfänger erreichen, gleiche Verzögerungen, Verstärkungen etc. verwendet werden.

Der Lichtstrahl 3 wird am Lichtempfänger auf einen lichtleitenden Stab 114 treffen, wo durch interne Totalreflektion und Streuung Licht von der Auftreffstelle zu den an den Stirnseiten des lichtleitenden Stabes 114 befestigten Lichtdetektoren 112, 113 gelangen wird. Die Intensität der zu den Lichtstrahlendetektorelementen 112, 113 jeweils gelangenden Lichtanteile ist dabei abhängig davon, wie nahe der Lichtstrahl 3 den lichtleitenden Stab 114 an den Lichtstrahlendetektorelementen 112, 113 trifft. Im dargestellten Ausführungsbeispiel trifft der Lichtstrahl 3 den lichtleitenden Stab 114 näher am Lichtstrahlendetektorelement 113 als am Lichtstrahlendetektorelement 112. Dies ist an den unterschiedlichen Strecken 1 bzw. m zu erkennen, die vom jeweiligen Auftreffpunkt bis zur Stirnseite laufen. Es wird im dargestellten Ausführungsbeispiel davon ausgegangen, dass die Intensität des an den Lichtstrahlendetektorelementen erhaltenen Lichtes ein Maß für die Entfernung des Auftreffpunktes des Lichtstrahles 3 auf den lichtleitenden Stab 114 zu den jeweiligen Stirnseiten darstellt. Es ist dafür nicht unbedingt erforderlich, dass dabei eine lineare Beziehung zwischen der Lichtintensität an den Lichtstrahlendetektorelementen und dem Verhältnis, in welchem der Auftreffpunkt die Länge des Stabes teilt, vorliegt; für Zwecke der vorliegenden Erläuterung kann dies aber ohne weiteres angenommen werden, auch wenn, etwa bei stark absorbierenden Stäben, Absorptionseffekte mit über die Lauflänge etwa exponentieller Abschwächung vorliegen können oder aus anderen Gründen eine Abweichung von einer Linearität gegeben sein kann; es sei aber erwähnt, dass derartige Fälle in der Regel durch eine geeignete Auswertung bzw. Kalibrierung erfassbar sind. Gegebenenfalls kann auch eine Vielzahl von Kalibrierquellen entsprechend Diode 111 oder dergleichen herangezogen werden, um Alinearitäten zu bestimmen.

Die Lichtstrahlendetektorelemente 112, 113 sind auf den Stirnseiten des lichtleitenden Stabes 114 so angeordnet, dass sie in den Stab eingekoppeltes Licht aufnehmen und in elektrische Signale verwandeln können. Im dargestellten Ausführungsbeispiel handelt es sich dabei beispielsweise um lichtempfindliche Photodioden. Die in der Fig. 1 als I1 und I2 bezeichneten Signale aus den Lichtstrahlendetektorelementen 113, 112 werden dann konditioniert, d. h. zunächst verstärkt in einer Verstärkerstufe 121, 131 und gegebenenfalls impedanzgewandelt, um anschließend einen Filter 122, 132 zu durchlaufen, der im dargestellten Ausführungsbeispiel als Hochpassfilter gebildet und geeignet ist, bei künstlicher Beleuchtung den netzphasenbedingt schwankenden Lichteinfall herauszufiltern und lediglich die höherfrequenten Signalanteile eines hinreichend schnell rotierenden Rotationslasers zu erfassen.

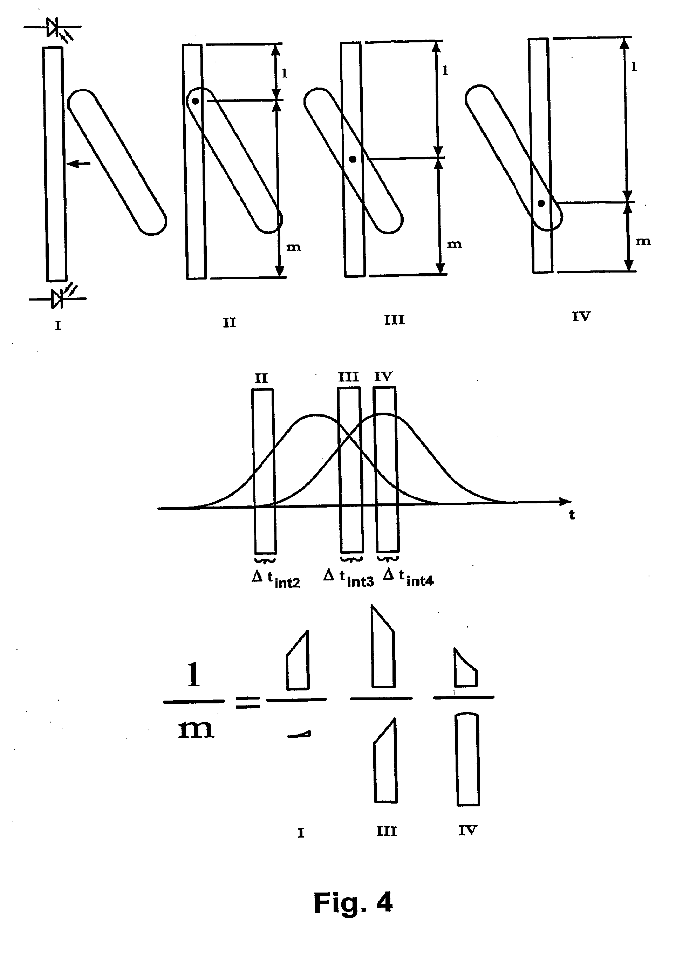

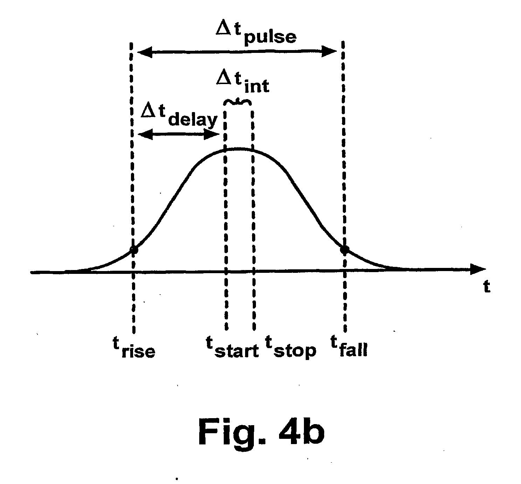

Das konditionierte und gefilterte Signal, in Fig. 1 bezeichnet als Sig1 und Sig2, wird dann an Integratoren 141, 142 gespeist, um die Signalintensität über die Zeit aufzuintegrieren. Derartige Integrationsschaltungen sind per se bekannt. Die Integratoren sind dabei steuerbar, d. h. die Startzeit, zu welcher mit der Integration begonnen wird, und die Beendigungszeit können von außen vorgegeben werden. In einer einfachen Variante wird die Startzeit anstiegsflankenabhängig gewählt, so dass erst bei Erreichen eines bestimmten Schwellwertes mit der Integration begonnen wird. Dies verhindert, dass unterschiedlich starkes Rauschen auf beiden Kanälen, das für eine längere Zeit mitberücksichtigt werden würde, zu größeren Signalverfälschungen führen kann. In einer bevorzugten Variante wird überdies die Startzeit relativ zu dem Flankenanstieg verzögerbar sein, wie später in Bezug auf die Fig. 4, 4b noch erläutert wird.

Um die Integrationsdauer zu begrenzen, ist der Integratoreinheit 140, die u.a. die Integratoren 141, 142 enthält eine Integrationsdauerbeendigung zugeordnet. In dem dargestellten Ausführungsbeispiel geschieht dies durch Einspeisen der jeweiligen aufintegrierten Analogsignale 171, 172 in einen Vergleicher 1432, in welchem verglichen wird, ob einer der Integralwerte eine bestimmte Schwelle c erreicht oder überschritten hat. Daß eine alternative Abbruchbedingung z.B. auch sein könnte, ob eine Funktion, wie z.B. die Summe beider Integratorsignale die Schwelle c erreicht hat, sei erwähnt. Sobald eine solche Überschreitung festgestellt ist, wird ein Stoppsignal ausgegeben, um eine weitere Aufintegration zu verhindern. Ist das Stoppsignal aktiv, wird das Torsignal 184 der Integratoren deaktiviert. Dies kann z. B. durch Öffnen eines aufzuintegrierenden, Signale durchlassenden Schalterelementes geschehen. Die Durchlass- oder Torschaltung hat den Effekt, dass in einem der Kanäle die Signalstärke näherungsweise c entspricht, vorliegend im Kanal 1, weil dort ein stärkeres Signal angesichts der Beziehung l < m vorliegt, während im anderen Kanal ein Integratorsignal erhalten wird, das deutlich kleiner ist als c.

Es sei erwähnt, dass neben einer reinen Schwellsteuerung für die Integrationsdauerbegrenzung alternativ und/oder zusätzlich eine zeitgebergesteuerte Integrationszeitbegrenzung gegeben sein kann. Damit kann verhindert werden, dass Signale ausgegeben werden, obwohl nur ein allenfalls extrem schwaches Signal empfangen wird oder die Integration durch zufälligen Lichteinfall, Signalrauschen oder dergleichen gestartet wird, aber dennoch kein tatsächlich relevantes Signal anliegt. Bei zusätzlicher Integrationsdauersteuerung kann alternativ und/oder zusätzlich im übrigen auch vorgesehen werden, dass über mehrere Signaldurchgänge bei repetitiv empfangenen Lichtstrahlen, wie dies bei Rotationslasern der Fall ist, integriert wird. Dies hat den Vorteil, dass dann auch bei sehr großen Entfernungen noch passable Genauigkeiten in der Höhenbestimmung möglich werden. Es kann dazu beispielsweise eine Synchronisation auf einen Strahl erfolgen und ein Signaldurchlass an die Integratoren jeweils lediglich für eine bestimmte Durchlasszeit während des erwarteten Signaldurchganges erfolgen. Damit wird quasi ein Lock-in-Verhalten ermöglicht.

Den Integratoren ist im in Fig. 1 dargestellten Ausführungsbeispiel ein jeweiliger Analog-Digital-Wandler 201, 202 nachgeschaltet, der die aufintergrierten Signalwerte in entsprechende digitale Werte wandelt. Die entsprechenden digitalen Werte werden in Fig. 1 mit X und Y bezeichnet, wobei aus dem Vorgesagten einsichtig sein wird, dass im vorliegenden Beispiel X näherungsweise c beträgt, während y kleiner sein wird. Um aus den an den Analog-Digital-Wandlern erhaltenen Werten X, Y auf die Lage des Auftreffpunktes 2 auf den lichtleitenden Stabe 7 zu schließen, ist eine Verrechnungsstufe 203 in der Auswertestufe 200 umfasst, die im vorliegenden Fall beispielhaft durch eine allgemeine mathematische Operation gebildet ist. Diese kann beispielsweise eine Divisorstufe , aber gleichfalls auch durch eine Differenzstufe mit geeigneter Normierung gebildet sein kann, also beispielsweise eine Größe berechnet gemäß (X - Y)/(X + Y); letztgenannte Variante hat insbesondere den Vorteil, bei sehr schwachen Signalen auf beiden Kanälen immer noch Signalamplitudenunabhängige Werte zu erhalten. Um die Messwerte außerdem von produktions- oder konstruktionsbedingten Linearitätsfehlern zu bereinigen, kann die Verrechnungsstufe im übrigen auch Korrekturwerte aus einem Kalibrierdatenspeicher 210 berücksichtigen. Diese Werte werden zum Zeitpunkt der Produktion in einer Kalibriervorrichtung ermittelt und anschließend im Kalibrierdatenspeicher 210 gespeichert.

Die beschriebene Anordnung wird verwendet wie folgt:

Zunächst wird ein Rotationslaser in Betrieb gesetzt, d. h. zur Emission eines eine möglichst exakt horizontal liegende Fläche überstreichenden Laserstrahls veranlasst. Wenn sich die Rotation stabilisiert hat, wird der Laserlichtempfänger 1 in die Strahlebene gebracht. Der Laserlichtstrahl 3 trifft jetzt wiederholt auf einer Stelle des lichtleitenden Stabes 114 auf, die indikativ für die Lage des lichtleitenden Stabes 114 relativ zur horizontalen Ebene ist, welche vom Laserstrahl überstrichen wird. Der Lichteinfall auf den lichtleitenden Stab 114 führt zu pulsartigen Signalen an den an dessen Stirnseiten vorgesehenen Lichtstrahlendetektorelementen 112, 113, die nach Verstärkung und frequenzgangsverändernder Konditionierung in der Filterstufe an die Integratorstufe 140 angelegt werden. Der Durchlass der konditionierten Signale erfolgt dabei in beiden Kanälen erstmals, sobald in einem von beiden Kanälen eine bestimmte Signalstärke überschritten wird. Ist dies in einem Kanal der Fall, wird also nicht nur der eine, sondern auch der andere Kanal aktiv geschaltet. Die Signale beider Kanäle werden nun integriert, bis am Integratorausgang eines Kanals ein bestimmter Schwellwert c überschritten wird, was in der Stufe 1432 festgestellt wird. Nach Überschreiten dieser Schwelle wird in der Stufe 143 festgestellt, dass die Integration zu beenden ist und entsprechend der Signaleingang an beiden Integratoren unterbrochen. Danach werden die Integratorausgänge 171, 172 an die Analog-Digital-Wandler 201, 202 gelegt und entsprechende digitale Werte X,Y bestimmt. Dies kann mit geringer Abtastfrequenz geschehen, da das Signal lange anliegt. Damit ist zugleich die Genauigkeit der Analog-Digital-Wandlung ohne großen Aufwand zu erhöhen. Nach erfolgter Analog-Digital-Wandlung kann die Integratoreinheit zurückgesetzt werden, um für den nächsten Durchlauf wieder von einem Anfangswert 0 beginnen zu können. Die an den Analog-Digital-Wandlern erhaltenen Werte X, Y werden dann in der Verrechnungstufe 203 verrechnet und es wird ein dem Verrechnungswert entsprechender Anzeigewert ausgegeben (vergleiche Bezugszahl 500 in Fig. 1a).

Dieser Wert kann indikativ sein für den Abstand der Lichtstrahldetektormitte von der vom Lichtstrahl überstrichenen Höhe oder indikativ dafür sein, ob die Mitte exakt auf der überstrichenen Ebene liegt.

Es wird darauf hingewiesen, dass Details der hier nur blockartig beschriebenen einzelnen Signalkonditionierstufe den Fig. 1a, 1b entnehmbar sind. Dabei ist es im übrigen nicht zwingend erforderlich, unbedingt eine Signalfilterung mit Frequenzgangbeschneidung vorzunehmen; gleichfalls nicht erforderlich ist, integrierte Komparatoren für die Auslöseschaltung zu wählen, wenngleich die Verwendung integrierter Bauteile bevorzugt wird.

Details einer möglichen Ausbildung der Auslöseschaltung sind in Fig. 1b gezeigt, wobei hier die Besonderheit herrscht, dass die gezeigten Komparatoren 1431, 1432 als Komparatoren mit Open-Collector-Ausgängen dargestellt sind.

Die mit Bezug auf Fig. 1 beschriebene Variante ist besonders einfach auszuführen und verhindert bereits eine Übersteuerung auch bei starken eingestrahlten Signalen. Es ist aber wünschenswert, wie in der Einleitung beschrieben, eine um die Strahldurchgangsmitte symmetrische Signalintegration vorzusehen. Warum eine solche bevorzugt ist, wird besonders leicht ersichtlich mit Bezug auf Fig. 4. Dort ist gezeigt, wie die Signale aussehen, wenn der lichtleitende Stab 114 nicht von einem punktförmigen Strahl 3 erfasst wird, sondern von einem langgestreckten und überdies schräg, hier mit einem Winkel von etwa 45° zum lichtleitenden Stab 114 verlaufenden Strahlenbündel überstrichen wird. Ersichtlich wird zunächst der Schwerpunkt des Auftreffens in einer Phase II nahe dem oberen Detektorelement, in einer mittleren Phase III in der Mitte des lichtleitenden Stabes und in einer Endphase IV nahe dem unteren Ende des lichtleitenden Stabes 114.

Es ist einsichtig, dass demgemäß der obere Detektor das Maximum seines Signals früher annimmt als der untere Detektor. Dies ist in der mittleren Zeile von Fig. 4 dargestellt. Wird nun mit der Integration begonnen, sobald bei einem der Detektoren das Signal einen bestimmten Schwellwert überschreitet, so ist klar, dass sowohl der Integrationsbeginn als auch das Erreichen eines Endwertes ausschließlich bestimmt sind durch die Signale an jenem Detektorelement, das früher ein großes Signal empfängt, also im dargestellten Ausführungsbeispiel dem oberen Lichtdetektorelement. Hier ist das Integral groß, während aufgrund der strahlschräglagebedingten Phasenverschiebung des unteren Detektorelementes von dort nur ein sehr kleines Signal erhalten wird. Es ist auch einsichtig, dass derselbe Fehler in umgekehrter Richtung gemacht würde, wenn sehr lange nach Auslösen des oberen Elementes zugewartet würde und etwa beim Integrationszeitraum Δtᵢₙₜ₃ eine Integration vorgenommen würde. Korrekte Werte ergeben sich hingegen dann, wenn in der Mitte des Strahldurchgangs, dargestellt bei Δtᵢₙₜ₂ gemessen wird. Dies ergibt per se den repräsentativsten Wert für die Strahlhöhe.

Fig. 4b zeigt nun, wie eine solche bevorzugte Verschiebung des Integrationsdauerfensters relativ zu einem Flankenpunkt vorgenommen werden kann. Ermöglicht wird eine solche Verschiebung des Integrationsdauerfensters, indem nicht mehr mit der Integration unmittelbar dann begonnen wird, wenn beim ersten der beiden Kanäle eine bestimmte Signalschwelle überschritten wird, sondern wenn vielmehr eine bestimmte Zeit, nämlich Δt_{delay} abgewartet wird, bevor mit der Integration für eine Dauer Δtᵢₙₜ begonnen wird.

Ohne weiteres ermöglicht wird eine Bestimmung von Δt_{delay}, wenn sich die Einstrahlung hinreichend gleichmäßig wiederholt, was bei üblichen Rotationslasern praktisch der Fall ist. Dann kann bei einem ersten Rotationsdurchgang I einerseits die Integrationszeit Δtᵢₙₜ bestimmt werden, und andererseits die Dauer des Pulses Δtₚᵤₗₛₑ. Die entsprechenden Schaltungen werden dazu bevorzugt in wenigstens einem Kanal erweitert um Anstiegs- und Abfallflankendetektoren und um eine Zeitdauermessung für die Messung der Zeitdauer zwischen diesen Flanken. Im in Fig. 4b dargestellten Ausführungsbeispiel ist übrigens aus Gründen der Übersichtlichkeit der Impulsdurchgang sehr lang dargestellt, was praktisch nicht zwingend der Fall sein muss.

Im nachfolgenden Durchgang wird dann davon ausgegangen, dass wiederum näherungsweise gleiche Strahldauern vorliegen werden, also der zuvor bestimmte Wert Δtₚᵤₗₛₑ der Strahldurchgansdauer wieder erreicht wird. Weiter wird davon ausgegangen, dass die zu erwartende Integrationsdauer näherungsweise konstant bleibt. Da die Integrationsdauer typisch von der Einstrahlungsintensität abhängig ist und sich diese Einstrahlungsintensität von Strahldurchgang zu Strahldurchgang aufgrund der hohen Repetitionsfrequenzen üblicher Baulaser selbst bei Bewegung des Lichtstrahlenempfängers, zB. durch einen Bediener nur langsam ändert, ist diese Annahme in hohem Maße gerechtfertigt. Es ist dann unmittelbar einsichtig, dass Δt_{delay} angenommen werden kann als ½ Δtₚᵤₗₛₑ - ½ Δtᵢₙₜ aus der letzten Messung zu entsprechen. Um diese Zeit kann nach Überschreiten des Schwellwertes der Integrationsbeginn verzögert werden. Dies ergibt eine um den Schwellmittendurchgang zumindest näherungsweise zyklische Strahlintegration; näherungsweise deshalb, weil aufgrund des Bezugs auf frühere Durchgänge keine exakte Strahlmittenlage für den aktuellen Durchgang gegeben sein muss.

In Fig. 1b ist die Zeitverzögerung durch ein, mit Hilfe einer Steuerspannung 186 der Auswerteeinheit 200 programmierbares Monoflop 1433 realisiert. Die Integrationsdauersteuerung 143 erzeugt hier mit Hilfe einer einfachen Zeitmessschaltung 1434 eine Spannung 185, die in ihrem Wert indikativ für die Lage der Integrationsdauer Δtᵢₙₜ innerhalb der Strahldurchgangsdauer Δtₚᵤₗₛₑ ist. Die Auswerteeinheit verwendet dann diese Spannung, um daraus eine neue Steuerspannung 186 für das nächste Ereignis zu erzeugen.

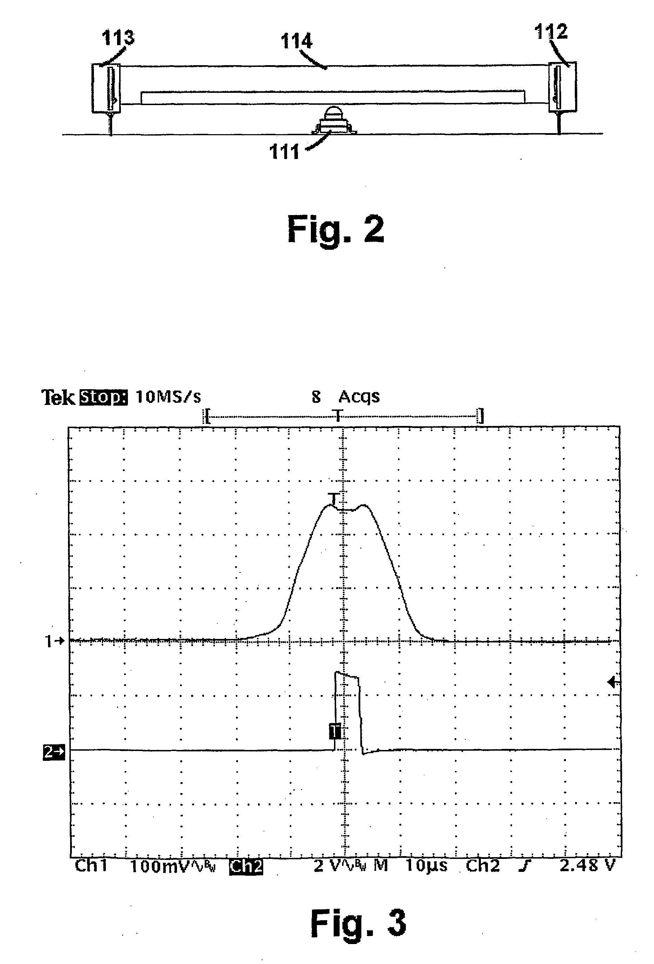

Bisher wurde nur erwähnt, dass die Zeitverzögerung durch ein eigenes Zeitverzögerungsglied 1433 realisiert wird; es kann aber auch eine Zeitverzögerung dadurch erzielt werden, dass die Auslöseschwelle für tᵣᵢₛₑ in Fig. 4b solange adaptiv erhöht wird, bis tᵣᵢₛₑ und tₛₜₐᵣₜ auf dem gleichen Zeitpunkt zu liegen kommen, weil eine Erhöhung der Auslöseschwelle den Integrationsbeginn gleichfalls verzögert. Dieses ist bei Signalimpulsen mit gaußförmiger Kurvenform o.w. möglich. Um auch komplexere Signalimpulse, wie in Fig. 3 gezeigt, exakt in der Mitte zu integrieren, kann überdies ein eigenes Zeitverzögerungsglied vorgesehen werden, wie es in Fig. 1b realisiert wurde.

Es sei darauf hingewiesen, dass während vorstehend die Beschreibung gegeben wurde für nur zwei Lichtdetektorelemente und diese überdies an einem lichtleitenden Stab angeordnet zu sein beschrieben sind, dies nicht zwingend der Fall sein muss. Es können mehrere Lichtdetektoren gegeben sein, es können Anordnungen ohne lichtleitenden Stab verwendbar sein und es ist nicht zwingend erforderlich, repetitive Strahlen zu verwenden.

## Patentansprüche

1. Lichtstrahlempfänger (1) zur Analyse eines Lichtstrahlempfangs mit einer Mehrzahl von Lichtstrahlendetektorelementen (112, 113) und Integratoren (141, 142) für lichtstrahldetektorelementbasierte Signale, wobei zumindest zwei Integratoren eine signalintegralbegrenzende Integrationsdauersteuerung (143) zugeordnet ist, so dass die Analyse des Lichtstrahlempfangs im Ansprechen auf in Beziehung zueinander ausgewertete Integratorsignale (171, 172) ermoglicht ist, **dadurch gekennzeichnet, dass** bei über die Lichtdetektorelemente bewegtem Strahl eine Strahlmittenerkennung und eine um den Strahlmittendurchgang zumindest näherungsweise zeitlich symmetrische Signalintegration vorgesehen ist.

2. Lichtstrahlempfänger nach dem vorhergehenden Anspruch, **dadurch gekennzeichnet, dass** zumindest ein Paar Lichtstrahlendetektorelemente als positionsempfindliche Elemente gebildet ist.

3. Lichtstrahlempfänger nach einem der vorhergehenden Ansprüche, **dadurch gekennzeichnet, dass** die Lichtstrahlendetektorelemente beabstandet sind.

4. Lichtstrahlempfänger nach dem vorhergehenden Anspruch, **dadurch gekennzeichnet, dass** die beabstandeten Licht-Strahlendetektoren an entgegengesetzten Enden eines lichtleitenden Stabes (114) vorgesehen sind.

5. Lichtstrahlempfänger nach dem vorhergehenden Anspruch, **dadurch gekennzeichnet, dass** der lichtleitende Stab (114) zur mantelflächigen Einkopplung des zu empfangenden Lichtstrahls ausgebildet ist.

6. Lichtstrahlempfänger nach einem der vorhergehenden Ansprüche, **dadurch gekennzeichnet, dass** mindestens eine Kalibrierquell (111) zur regelmäßigen Selbstkalibrierung vorgesehen ist, insbesondere zur impulsartigen Lichtbeaufschlagung der Detektoren.

7. Lichtstrahlempfänger nach dem vorhergehenden Anspruch, **dadurch gekennzeichnet, dass** die Kalibrierquelle (111) so angeordnet ist, dass ihr Licht die von mehreren Lichtstrahlendetektorelementen, insbesondere zwei beabstandet voneinander angeordneten Lichtstrahlendetektorelementen, insbesondere jedem Lichtstrahlendetektorelement des Empfängers, empfangen werden kann.

8. Lichtstrahlempfänger nach einem der vorhergehenden Ansprüche, **dadurch gekennzeichnet, dass** er zur Auswertung eines repetitiv temporär empfangenen, insbesondere von einer rotierenden Laserlichtquelle emittierten Lichtstrahls ausgebildet ist.

9. Lichtstrahlempfänger nach einem der vorhergehenden Ansprüche, **dadurch gekennzeichnet, dass** zwischen Lichtstrahlendetektorelementen und Integratoren Verstärkungs- (121, 131) und/oder Frequenzfilterungsstufen (122, 132) angeordnet sind.

10. Lichtstrahlempfänger nach einem der vorhergehenden Ansprüche, **dadurch gekennzeichnet, dass** jedem Detektor ein eigener Integrator zugeordnet ist.

11. Lichtstrahlempfänger nach einem der vorhergehenden Ansprüche, **dadurch gekennzeichnet, dass** die wenigstens zwei Integratoren so zueinander synchronisiert sind, dass sie gemeinsam aktivierbar- und/oder deaktivierbar sind.

12. Lichtstrahlempfänger nach einem der vorhergehenden Ansprüche, **dadurch gekennzeichnet, dass** die Integratorsteuerung als Signale nur temporär und/oder bedingt durchlassende Torsteuerung ausgebildet ist.

13. Lichtstrahlempfänger nach dem vorhergehenden Anspruch für repetitiv die Lichtstrahlendetektorelemente überstreichende Lichtstrahlen, **dadurch gekennzeichnet, dass** die Torsteuerung zur Berücksichtigung früherer Toröffnungszeiten und/oder einer Repetitionsfrequenz ausgebildet ist.

14. Lichtstrahlempfänger nach einem der vorhergehenden Ansprüche, **dadurch gekennzeichnet, dass** die Integratorsteuerung ausgebildet ist zum Durchlass von zu integrierenden Signalen für eine Zeit, die kurz gegen eine sich gegebenenfalls repetitiv wiederholende einzelne Einstrahlzeit ist.

15. Lichtstrahlempfänger nach einem der vorhergehenden Ansprüche, **dadurch gekennzeichnet, dass** die Integratorsteuerung zur Beendigung der Integration im Ansprechen auf ein Erreichen und/oder Überschreiten einer Schwelle durch ein lichtstrahlendetektorelementbasiertes Signal, insbesondere ein Überschreiten einer Schwelle durch Integratorsignale ausgebildet ist.

16. Lichtstrahlempfänger nach einem der vorhergehenden Ansprüche, **dadurch gekennzeichnet, dass** eine Auswerteschaltung (200) zur Ausführung der Analyse vorgesehen ist.

17. Lichtstrahlempfänger nach einem der vorhergehenden Ansprüche, **dadurch gekennzeichnet, dass** die Auswerteschaltung (200) zur Strahlhöhen und/oder- mittenbestimmung vorgesehen ist.

18. Lichtstrahlempfänger nach einem der vorhergehenden Ansprüche, **dadurch gekennzeichnet, dass** die Auswerteschaltung (200) zur Bildung von Integratorsignaldifferenzen und/oder- quotienten zur Analyse des Lichtstrahlempfangs ausgebildet ist.

19. Lichtstrahlempfänger nach einem der vorhergehenden Ansprüche, **dadurch gekennzeichnet, dass** die Auswerteschaltung (200) eine ADC-Stufe (201, 202) umfasst, um die in digitale Werte gewandelten Analogsignale miteinander verrechnen bzw. in logischer Form verknüpfen zu können.

## Claims

1. Light-beam receiver (1) for analysing light-beam reception using a plurality of light-beam detector elements (112, 113) and integrators (141, 142) for light-beam detector element-based signals, wherein a signal integral-limiting integration time control (143) is assigned to at least two integrators so that the analysis of light-beam reception is facilitated in response to integrator signals (171, 172) evaluated in relation to one another, **characterised in that** when a beam is moved over the light detector elements, beam centre detection and an at least approximately chronologically symmetrical signal integration around the beam centre passage is provided.

2. Light-beam receiver according to the preceding claim, **characterised in that** at least one pair of light-beam detector elements is formed as position-sensitive elements.

3. Light-beam receiver according to one of the preceding claims, **characterised in that** the light-beam detector elements are spaced apart.

4. Light-beam receiver according to the preceding claim, **characterised in that** the spaced-apart light-beam detectors are provided at opposite ends of a light-conducting rod (114).

5. Light-beam receiver according to the preceding claim, **characterised in that** the light-conducting rod (114) is designed for surface-area coupling of the light-beam to be received.

6. Light-beam receiver according to one of the preceding claims, **characterised in that** at least one calibration source (111) is provided for regular self-calibration, in particular for pulse-like light exposure of the detectors.

7. Light-beam receiver according to the preceding claim, **characterised in that** the calibration source (111) is arranged so that its light may be received by several light-beam detector elements, in particular two light-beam detector elements arranged at a distance from one another, in particular each light-beam detector element of the receiver.

8. Light-beam receiver according to one of the preceding claims, **characterised in that** it is designed to evaluate a repetitively temporarily received light beam emitted in particular by a rotating laser light source.

9. Light-beam receiver according to one of the preceding claims, **characterised in that** amplification stages (121, 131) and/or frequency filtering stages (122, 132) are arranged between light-beam detector elements and integrators.

10. Light-beam receiver according to one of the preceding claims, **characterised in that** a separate integrator is assigned to each detector.

11. Light-beam receiver according to one of the preceding claims, **characterised in that** the at least two integrators are synchronised to one another so that they can be activated and/or deactivated jointly.

12. Light-beam receiver according to one of the preceding claims, **characterised in that** the integrator control is designed as a gate control allowing signals through only temporarily and/or conditionally.

13. Light-beam receiver according to the preceding claim for light beams repetitively sweeping the light-beam detector elements, **characterised in that** the gating is designed to take into account earlier gate opening times and/or a repetition frequency.

14. Light-beam receiver according to one of the preceding claims, **characterised in that** the integrator control is designed to transmit signals to be integrated for a time which is short compared to an optionally repetitively repeating individual irradiation time.

15. Light-beam receiver according to one of the preceding claims, **characterised in that** the integrator control is designed for completing integration in response to reaching and/or exceeding a threshold by a light-beam detector element-based signal, in particular exceeding of a threshold by integrator signals.

16. Light-beam receiver according to one of the preceding claims, **characterised in that** an evaluation circuit (200) is provided to execute the analysis.

17. Light-beam receiver according to one of the preceding claims, **characterised in that** the evaluation circuit (200) is provided to determine beam height and/or beam centre.

18. Light-beam receiver according to one of the preceding claims, **characterised in that** the evaluation circuit (200) is designed to form integrator signal differences and/or integrator signal quotients for analysing light-beam reception.

19. Light-beam receiver according to one of the preceding claims, **characterised in that** the evaluation circuit (200) comprises an ADC stage (201, 202) to be able to settle the analog signals changed to digital values with one another or link them in logical form.

## Revendications

1. Récepteur de faisceau lumineux (1) destiné à l'analyse d'une réception d'un faisceau lumineux comprenant une pluralité d'éléments de détection de faisceau lumineux (112, 113) et d'intégrateurs (141, 142) pour des signaux basés sur les éléments de détection de faisceau lumineux, dans lequel une commande de durée d'intégration (143) limitant l'intégration des signaux est adjointe à au moins deux intégrateurs de telle sorte que l'analyse de la réception d'un faisceau lumineux peut être exécutée en réaction à des signaux des intégrateurs (171, 172) évalués l'un par rapport à l'autre, **caractérisé en ce que** lorsqu'un faisceau est déplacé à travers les éléments de détection de lumière, il est prévu une identification du centre du faisceau et une intégration des signaux au moins approximativement symétrique dans le temps par rapport au passage du centre du faisceau.

2. Récepteur de faisceau lumineux selon la revendication précédente, **caractérisé en ce qu'**au moins une paire d'éléments de détection de faisceau lumineux est réalisée en tant qu'éléments sensibles à la position.

3. Récepteur de faisceau lumineux selon l'une des revendications précédentes, **caractérisé en ce que** les éléments de détection de faisceau lumineux sont situés à distance les uns des autres.

4. Récepteur de faisceau lumineux selon la revendication précédente, **caractérisé en ce que** les détecteurs de faisceau lumineux à distance sont prévus à des extrémités opposées d'une barre conductrice de lumière (114).

5. Récepteur de faisceau lumineux selon la revendication précédente, **caractérisé en ce que** la barre conductrice de lumière (114) est conçue aux fins du couplage au niveau de la surface d'enveloppe du faisceau lumineux devant être reçu.

6. Récepteur de faisceau lumineux selon l'une des revendications précédentes, **caractérisé en ce qu'**il est prévu au moins une source de calibrage (111) aux fins d'un calibrage automatique régulier, en particulier aux fins d'une excitation lumineuse des détecteurs d'une manière similaire à des impulsions.

7. Récepteur de faisceau lumineux selon la revendication précédente, **caractérisé en ce que** la source de calibrage (111) est agencée de telle sorte que sa lumière peut être reçue par plusieurs éléments de détection de faisceau lumineux, en particulier par deux éléments de détection de faisceau lumineux agencés à distance l'un de l'autre, en particulier par l'élément de détection de faisceau lumineux du récepteur.

8. Récepteur de faisceau lumineux selon l'une des revendications précédentes, **caractérisé en ce qu'**il est conçu aux fins de l'évaluation d'un faisceau lumineux reçu de façon répétitive temporaire, en particulier émis par une source de lumière laser en rotation.

9. Récepteur de faisceau lumineux selon l'une des revendications précédentes, **caractérisé en ce que** des étages de renforcement (121, 131) et/ou de filtrage de fréquence (122, 132) sont agencés entre des éléments de détection de faisceau lumineux et des intégrateurs.

10. Récepteur de faisceau lumineux selon l'une des revendications précédentes, **caractérisé en ce qu'**un intégrateur spécifique est adjoint à chaque détecteur.

11. Récepteur de faisceau lumineux selon l'une des revendications précédentes, **caractérisé en ce que** les au moins deux intégrateurs sont synchronisés l'un par rapport à l'autre de telle sorte qu'ils peuvent être activés et/ou désactivés conjointement.

12. Récepteur de faisceau lumineux selon l'une des revendications précédentes, **caractérisé en ce que** la commande de l'intégrateur est conçue en tant que signaux d'une commande de porte permettant seulement le passage de façon temporaire et/ou à certaines conditions.

13. Récepteur de faisceau lumineux selon la revendication précédente pour des faisceaux lumineux recouvrant les éléments de détection de faisceau lumineux de façon répétitive, **caractérisé en ce que** la commande de porte est conçue de façon à prendre en considération des temps d'ouverture de porte plus précoces et/ou une fréquence de répétition.

14. Récepteur de faisceau lumineux selon l'une des revendications précédentes, **caractérisé en ce que** la commande de l'intégrateur est conçue aux fins du passage de signaux à intégrer pendant un temps qui est court par rapport à un temps de rayonnement individuel se répétant le cas échéant de façon répétitive.

15. Récepteur de faisceau lumineux selon l'une des revendications précédentes, **caractérisé en ce que** la commande de l'intégrateur est conçue de façon à arrêter l'intégration en réaction au fait qu'un seuil soit atteint et/ou dépassé par un signal basé sur les éléments de détection de faisceau lumineux, en particulier au fait qu'un seuil soit dépassé par des signaux de l'intégrateur.

16. Récepteur de faisceau lumineux selon l'une des revendications précédentes, **caractérisé en ce qu'**il est prévu une commutation de l'évaluation (200) aux fins de l'exécution de l'analyse.

17. Récepteur de faisceau lumineux selon l'une des revendicatiosn précédentes, **caractérisé en ce que** la commutation de l'évaluation (200) est prévue aux fins de la détermination de la hauteur et/ou du centre du faisceau.

18. Récepteur de faisceau lumineux selon l'une des revendications précédentes, **caractérisé en ce que** la commutation de l'évaluation (200) est conçue de façon à former des différences et/ou des quotients des signaux de l'intégrateur aux fins de l'analyse de la réception d'un faisceau lumineux.

19. Récepteur de faisceau lumineux selon l'une des revendications précédentes, **caractérisé en ce que** la commutation de l'évaluation (200) comprend un étage ADC (201, 202) afin de pouvoir compenser l'un avec l'autre ou associer sous une forme logique les signaux analogiques convertis en valeurs numériques.
